# FASCICULE DE BREVET EUROPEEN

(11) **EP 1 160 951 B1**
(45) Date de publication et mention de la délivrance du brevet: **09.12.2009**
(21) Numéro de dépôt: 01401144.9
(22) Date de dépôt: 03.05.2001
(51) Int. Cl.: H02G 3/10, H02G 3/08

(54) **Boîte de dérivation pour goulottes, en particulier pour passages de plancher**
Verteilerkasten zur Verwendung in Kabelkanälen, insbesondere für Unterflurdurchführungen
Distribution box for use in cable ducts, especially for underfloor passages

(30) Priorité: 29.05.2000 FR 0006839
(43) Date de publication de la demande: 05.12.2001
(73) Titulaire: Legrand France, 87000 Limoges (FR); Legrand SNC, 87000 Limoges (FR)
(72) Inventeur: Bellanger, Jérôme, 72000 Le Mans (FR)
(74) Mandataire: Santarelli

(56) Documents cités:
- FR-A- 2 709 614
- US-A- 5 270 490
- US-A- 5 362 922
- US-A- 5 796 037

## Description

La présente invention concerne une boîte de dérivation pour goulottes, en particulier pour passages de plancher, comprenant une embase et un couvercle de fermeture.

On connaît déjà une telle boîte de dérivation qui comporte un séparateur apte à être positionné au-dessus de l'embase pour créer dans ladite boîte deux niveaux isolés l'un de l'autre.

L'embase et le séparateur de la boîte de dérivation de type connu comprennent des cloisons verticales positionnées en quinconce, et aptes à être découpées pour créer des chemins de circulation de câbles ou conducteurs électriques.

Une boîte de dérivation du genre mentionné ci-dessus est décrite dans les documents US-A-5270490 et FR-A-2709614.

L'inconvénient principal d'une telle boîte de dérivation est qu'elle est relativement complexe à mettre en oeuvre, dans la mesure où il faut que l'installateur découpe à la demande les cloisons de l'embase et du séparateur pour faire passer les câbles ou conducteurs électriques d'une goulotte à l'autre.

De plus, une telle boîte de dérivation ne comporte pas de logement constituant une boîte de connexion dans ladite boîte de dérivation.

Afin de remédier aux inconvénients précités, la présente invention propose une nouvelle boîte de dérivation pour goulotte comprenant une embase et un couvercle de fermeture, caractérisée en ce que l'embase comporte un logement central délimité par des cloisons découpables, formant boîte de connexion électrique, et autour de ce logement central un chemin ouvert de circulation de câbles ou conducteurs électriques.

Ainsi, dans la boîte de dérivation selon l'invention, conformément aux normes en vigueur, les différentes connexions entre les conducteurs ou câbles électriques provenant des différentes goulottes, peuvent être réalisées à l'intérieur du logement central formant boîte de connexion électrique, l'arrivée des conducteurs ou câbles électriques à connecter dans ledit logement central s'effectuant par une ouverture formée par découpage d'une des cloisons délimitant le logement central sur l'embase.

Selon un mode de réalisation préférentiel de la boîte de dérivation conforme à l'invention, celle-ci comporte un séparateur apte à être positionné au-dessus de l'embase pour créer dans ladite boîte deux niveaux isolés l'un de l'autre, un niveau pour les câbles ou conducteurs courant fort et un niveau pour les câbles ou conducteurs courant faible, ce séparateur comportant un évidement central traversant bordé par des cloisons découpables et, sur chaque face du séparateur, autour de cet évidement central, un chemin ouvert de circulation de câbles ou conducteurs électriques, ledit évidement central étant destiné à former un prolongement du logement central de l'embase.

Avantageusement, selon ce mode de réalisation préférentiel de la boîte de dérivation conforme à l'invention, les cloisons qui bordent l'évidement central traversant du séparateur et qui sont situées du côté tourné vers l'embase, forment des surfaces de guidage qui, lors de la mise en place du séparateur sur l'embase, sont aptes à coulisser sur les cloisons délimitant le logement central de l'embase.

Une telle boîte de dérivation est aisée à mettre en oeuvre, les chemins ouverts de circulation de câbles ou conducteurs électriques prévus sur l'embase et sur le séparateur permettant à l'installateur de faire passer rapidement des câbles ou conducteurs électriques d'une goulotte à une autre:

En outre, le séparateur est facilement positionnable sur l'embase grâce à ses surfaces de guidage qui coulissent sur les cloisons délimitant le logement central de l'embase.

Selon une autre caractéristique particulièrement avantageuse de la boîte de dérivation conforme à l'invention, le séparateur est apte à être placé selon différentes positions en hauteur par rapport à l'embase comprises entre deux positions limites haute et basse, pour adapter le volume de câblage des deux niveaux au besoin d'utilisation.

A cet effet, le séparateur est monté à coulissement sur l'embase, et, en particulier, le séparateur comprend des languettes élastiques dont les extrémités sont aptes à coulisser dans des rainures prévues sur la face externe de cheminées s'élevant à partir de l'embase.

Selon une autre caractéristique de la boîte de dérivation conforme à l'invention, le couvercle de fermeture comporte deux parties, d'une part, une première partie formant ceinture apte à recouvrir l'embase, cette première partie comportant une paroi latérale périphérique pourvue d'ouvertures communiquant avec l'intérieur des goulottes, et une paroi de façade pourvue d'une ouverture centrale autorisant l'accès à l'intérieur de la boîte de dérivation et en particulier audit logement central et à au moins une partie du chemin de circulation des câbles ou conducteurs électriques, et, d'autre part, une plaque de fermeture de la paroi de façade de ladite première partie formant ceinture.

Le couvercle de fermeture de cette boîte de dérivation permet, lorsqu'elle est partiellement fermée par l'intermédiaire de la ceinture positionnée sur l'embase, d'avoir accès à l'intérieur de cette boîte de dérivation par l'ouverture centrale prévue sur la paroi de façade de ladite partie formant ceinture.

Selon un mode de réalisation de la boîte de dérivation conforme à l'invention, la partie formant ceinture est fixée sur l'embase au moyen de vis vissées dans des cheminées de réception portées par l'embase.

Selon une variante de réalisation, la partie formant ceinture est fixée sur une platine en forme de cadre en la recouvrant au moyen de vis vissées dans des cheminées de réception portées par ladite platine, cette dernière étant fixée par encliquetage autour de ladite embase.

A cet effet, avantageusement, la paroi de façade de la partie formant ceinture porte des plots de guidage des vis de fixation, destinés à reposer sur les extrémités desdites cheminées.

En outre, selon d'autres caractéristiques avantageuses et non limitatives de la boîte de dérivation conforme à l'invention :
- il est prévu des caches rapportés sur les ouvertures non utilisées de la partie formant ceinture afin de les obturer ;
- le logement central de l'embase présente une forme circulaire formant avec ledit chemin ouvert un rond-point de circulation de câbles ou conducteurs électriques ;
- les formes des chemins ouverts de circulation des câbles ou conducteurs électriques de l'embase et du séparateur sont identiques, et la forme de l'évidement central du séparateur est identique à celle du logement central de l'embase ;
- l'embase comporte sur ses bords aptes à être placés de manière adjacente aux bords coupés des socles de goulottes, des cloisons définissant, avec des cloisons prévues sur les bords du séparateur, des logements parallélépipédiques isolés les uns des autres et ouverts vers l'extérieur de ladite boîte, lesdites cloisons de l'embase et du séparateur étant aptes à être découpées pour former des conduits pour l'introduction de câbles ou conducteurs électriques à un desdits niveaux de ladite boîte, de manière isolée de l'autre niveau de cette dernière, et
- il est prévu une platine en forme de cadre fixée par encliquetage autour de l'embase et destinée à être recouverte par la première partie formant ceinture du couvercle de fermeture, cette platine en forme de cadre comportant, sur ses bords aptes à être placés de manière adjacente aux bords coupés des socles de goulottes, des cloisons définissant, avec des cloisons prévues sur les bords du séparateur, des logements parallélépipédiques isolés les uns des autres et ouverts vers l'extérieur de ladite boîte, lesdites cloisons de la platine et du séparateur étant aptes à être découpées pour former des conduits pour l'introduction de câbles ou conducteurs électriques à un desdits niveaux de ladite boîte, de manière isolée de l'autre niveau de cette dernière.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective éclatée d'un mode de réalisation préférentiel de la boîte de dérivation selon l'invention ;
- la figure 2 est une vue en perspective assemblée et partiellement ouverte de la boîte de dérivation de la figure 1 ;
- la figure 3 est une vue de détail du montage, en positon limite basse, du séparateur sur l'embase de la boîte de dérivation représentée sur la figure 1 ;
- la figure 4 est une vue de détail du montage, en position limite haute, du séparateur sur l'embase de la boîte de dérivation représentée sur la figure 1 ;
- la figure 5 est une vue en perspective de trois quarts du séparateur de la boîte de dérivation représentée sur la figure 1 ;
- la figure 6 est une vue en perspective de dessus d'une variante de réalisation de l'embase de la boîte de dérivation selon l'invention ; et
- la figure 7 est une vue en perspective de dessus d'une autre variante de réalisation de l'embase de la boîte de dérivation selon l'invention.

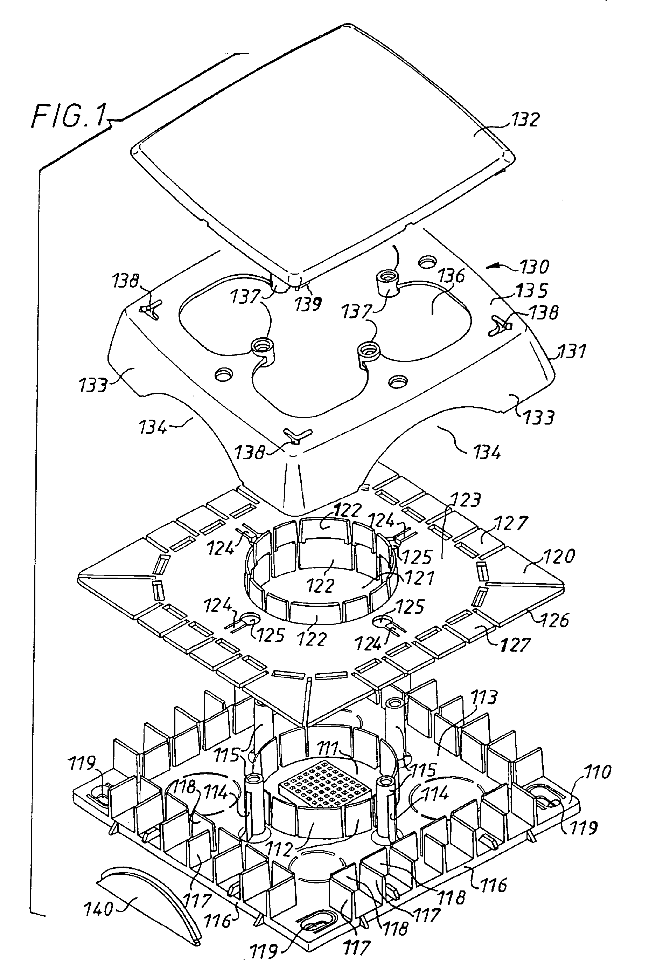

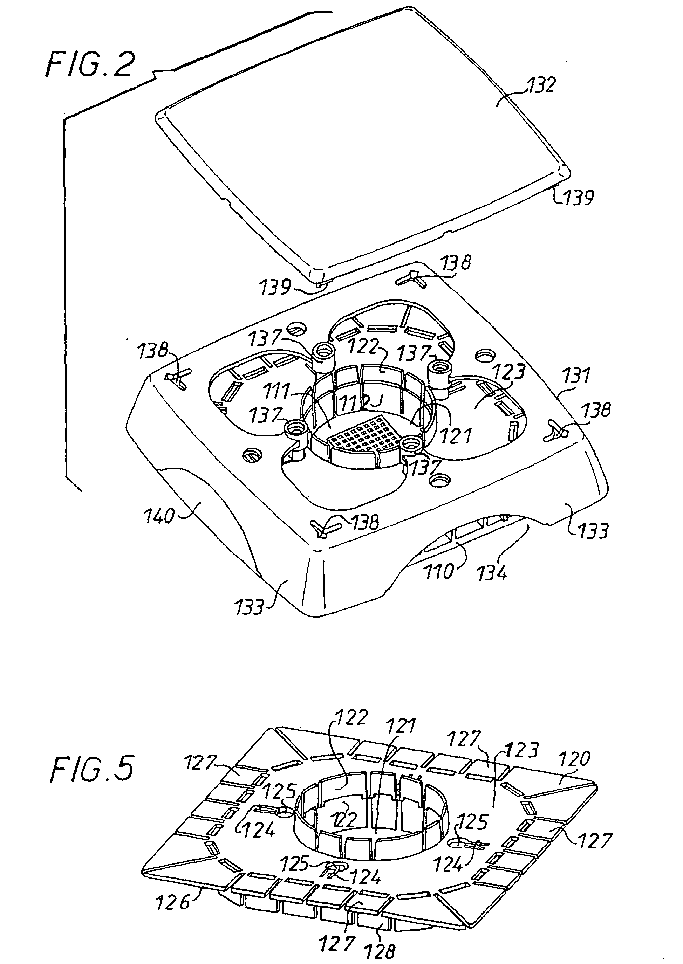

Sur les figures 1 et 2, on a représenté une boîte de dérivation 100 pour goulotte, et en particulier pour passage de plancher.

Cette boîte de dérivation 100 comprend une embase 110, ici une plaque de forme carrée, apte à être fixée sur un support, le sol pour un passage de plancher, ou un support vertical pour des goulottes murales, par l'intermédiaire de vis engagées dans des ouvertures 119 prévues à cet effet aux quatre coins de cette embase.

Chacun des bords 116 de l'embase 110 est apte à être positionné de manière adjacente à un bord coupé d'un socle d'une goulotte.

L'embase 110 comporte un logement central 111 délimité par des cloisons découpables 112 portées par l'embase 110.

Le logement central 111 forme, dans ladite boîte de dérivation, une boîte de connexion électrique à l'intérieur de laquelle peuvent être réalisées les connexions électriques entre différents câbles ou conducteurs électriques provenant des différentes goulottes débouchant dans ladite boîte de dérivation 100.

Autour de ce logement central 111 est défini un chemin ouvert 113 de circulation de câbles ou conducteurs électriques.

Ici, préférentiellement, le logement central 111 de l'embase 110 présente une forme circulaire formant avec ledit chemin ouvert 113 un rond-point de circulation de câbles ou conducteurs électriques.

En outre, la boîte de dérivation 100 comporte un séparateur 120 apte à être positionné au-dessus de l'embase 110 pour créer dans ladite boîte deux niveaux isolés l'un de l'autre, un niveau pour les câbles ou conducteurs transportant du courant fort et un niveau pour les câbles ou conducteurs transportant du courant faible.

Ce séparateur 120 se présente sous la forme d'une plaque de forme carrée identique à celle de l'embase et comporte avantageusement un évidement central 121 traversant bordé par des cloisons 122 faisant saillie sur chacune des faces du séparateur, et sur chaque face du séparateur, autour de cet évidement central 121, un chemin ouvert 123 de circulation de câbles ou conducteurs électriques.

L'évidement central 121 traversant du séparateur est destiné à former un prolongement dudit logement central 111 de l'embase 110 (voir figure 2).

Les cloisons 122 qui bordent l'évidement central 121 du séparateur 120 sont également découpables pour former des ouvertures d'arrivée des câbles ou conducteurs électriques dans la boîte de connexion formée par la superposition des deux évidements centraux de l'embase et du séparateur.

Bien entendu, l'évidement central 121 traversant du séparateur 120 présente avantageusement une forme identique à celle du logement central de l'embase 110, les formes des chemins ouverts de circulation 113, 123 des câbles ou conducteurs électriques de l'embase et du séparateur étant également identiques.

En outre, avantageusement, les cloisons 122 qui bordent l'évidement central 121 du séparateur 120 et qui sont situées du côté tourné vers l'embase 110 forment des surfaces de guidage qui, lors de la mise en place du séparateur 120 sur l'embase 110, sont aptes à coulisser sur les cloisons 112 délimitant le logement central 111 de l'embase 110.

Ainsi, le montage du séparateur 120 sur l'embase 110 est particulièrement aisé, et quand ledit séparateur 120 est monté sur l'embase 110 la boîte de connexion de la boîte de dérivation est localement isolée du chemin de circulation de câbles par un double cloisonnement constitué par la superposition des cloisons 112, 122 portées par l'embase et le séparateur.

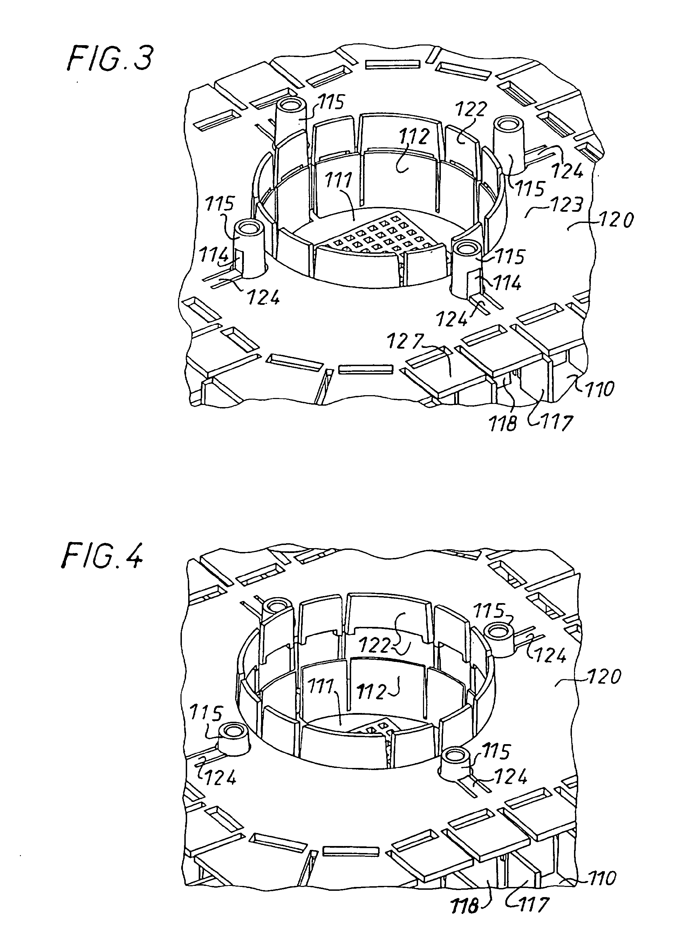

Comme cela est plus particulièrement représenté sur les figures 3 et 4, le séparateur 120 est apte à être placé selon différentes positions en hauteur par rapport à l'embase 110 comprises entre deux positions limites haute (voir figure 4) et basse (voir figure 3), pour adapter le volume de câblage des deux niveaux de la boîte de dérivation au besoin d'utilisation.

A cet effet, le séparateur 120 est monté à coulissement sur l'embase 110.

Selon le mode de réalisation représenté sur les figures, le séparateur 120 comporte des languettes élastiques 124 qui viennent de formation avec ledit séparateur, par découpage de la plaque formant le séparateur, dont les extrémités débouchent dans des logements circulaires 125 aptes à être enfilés sur des cheminées 115 portées par l'embase, lesdites extrémités des languettes élastiques 124 étant aptes à coulisser dans des rainures 114 prévues sur la face externe de ces cheminées 115.

Bien entendu, les extrémités des languettes élastiques 124 retiennent par frottement le séparateur 120 en position sur les cheminées 115, et l'ajustement de la position du séparateur 120 par rapport à l'embase 110 s'effectue en poussant vers le bas ou en tirant vers le haut ledit séparateur 120 pour faire coulisser lesdites languettes élastiques 124 dans les rainures 114 des cheminées 115.

En outre, la boîte de dérivation 100 comporte un couvercle de fermeture 130 comprenant, ici, avantageusement, deux parties, d'une part, une première partie formant ceinture 131 apte à recouvrir l'embase 110, cette première partie 131 comportant une paroi latérale périphérique 133 pourvue d'ouvertures en forme d'arche 134 communiquant avec l'intérieur des goulottes positionnées de manière adjacente à ladite boîte de dérivation, et une paroi de façade 135 pourvue d'une ouverture centrale 136 autorisant l'accès à l'intérieur de ladite boîte de dérivation et en particulier audit logement central 111, et à au moins une partie du chemin de circulation 123 des câbles ou conducteurs électriques, et, d'autre part, une plaque de fermeture 132 de la paroi de façade 135 de ladite première partie formant ceinture 131.

L'ouverture centrale 136 de la partie formant ceinture 131 du couvercle de fermeture 130 présente, ici, préférentiellement, la forme d'un trèfle à quatre feuilles dont les pétales s'étendent à partir d'une zone centrale centrée sur le logement central 111, 121 formant la boîte de connexion de la boîte de dérivation 100.

Les ouvertures définies par les pétales de l'ouverture centrale 136 de la partie formant ceinture 131 permettent l'accès au chemin ouvert 123 de circulation de câbles prévu dans ladite boîte de dérivation 100.

Selon le mode de réalisation représenté sur les figures 1 et 2, la partie formant ceinture 131 du couvercle de fermeture de la boîte de dérivation 100 est fixée sur l'embase 110 au moyen de vis vissées dans des cheminées de réception 115 portées par l'embase 110.

Ces cheminées de réception 115 sont celles qui servent au montage à coulissement du séparateur 120 sur l'embase 110.

A cet effet, la paroi de façade 135 de la partie formant ceinture 131 porte des plots de guidage 137, chaque plot étant situé à la jonction entre deux pétales de l'ouverture centrale 136 en forme de trèfle à quatre feuilles, lesdits plots étant destinés à reposer sur les extrémités desdites cheminées de réception 115 portées par l'embase 110.

A l'intérieur de ces plots de guidage 137, il est prévu un rebord annulaire supportant la tête de vis de chaque vis de fixation.

En outre, la plaque de fermeture 132 est encliquetée sur la paroi de façade 135 de la partie formant ceinture 131.

Plus particulièrement, la plaque de fermeture 132, de forme carrée, comporte à ses quatre coins des pattes d'encliquetage 139 en forme d'angle destinées à s'encliqueter dans des ouvertures de forme complémentaire 138 prévues aux quatre coins de la paroi de façade 135 de la partie formant ceinture 131 du couvercle de fermeture 130.

Par ailleurs, il est prévu des caches 140, de forme complémentaire à celle des ouvertures en forme d'arche 134 prévues dans la paroi périphérique latérale 133 de la partie formant ceinture 131, aptes à être rapportés sur lesdites ouvertures en forme d'arche 134 non utilisées de la partie formant ceinture 131 afin de les obturer (voir la figure 2).

Selon le mode de réalisation représenté sur les figures 1 à 5, l'embase 110 comporte, sur ses bords 116 aptes à être placés de manière adjacente aux bords coupés des socles de goulottes, des cloisons 117, 118 découpables et définissant, avec des cloisons 127, 128 (voir figure 5) prévues sur les bords 126 du séparateur 120, des logements parallélépipédiques isolés les uns des autres et ouverts vers l'extérieur de ladite boîte de dérivation.

Ces cloisons 117, 118, 127, 128 de l'embase 110 et du séparateur 120 sont aptes à être découpées pour former des conduits pour l'introduction de câbles ou conducteurs électriques à un desdits niveaux de ladite boîte, de manière isolée de l'autre niveau de cette dernière.

Bien entendu, le découpage des cloisons 117, 118, 127, 128 est fait à la demande par l'installateur.

Les différentes parties décrites précédemment de la boîte de dérivation sont réalisées avantageusement par moulage d'une matière plastique.

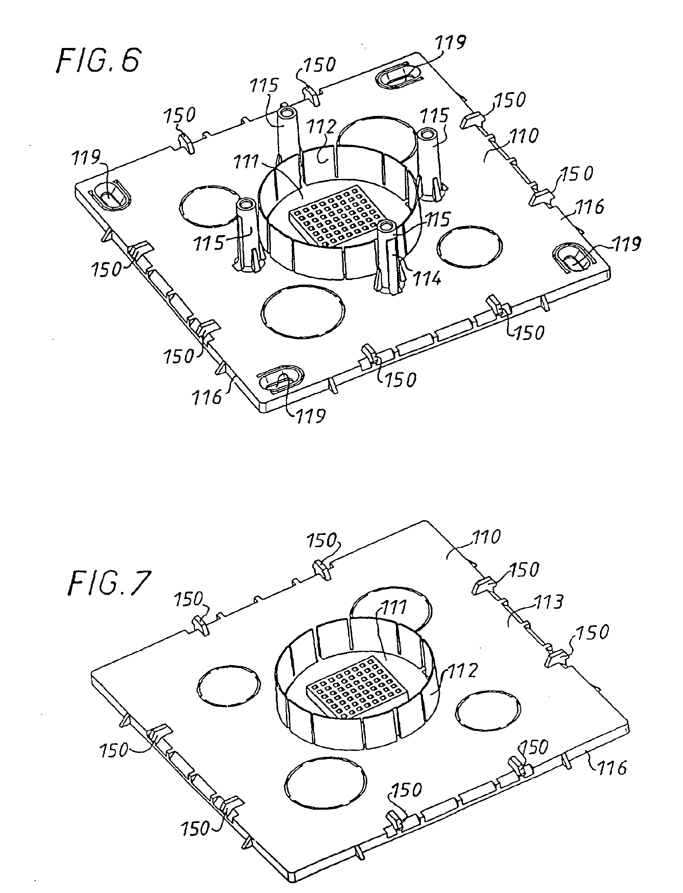

Par exemple, on pourra envisager, comme le montrent les figures 6 et 7, que l'embase 110 comprend sur ses bords 116 des moyens d'encliquetage 150 d'une platine en forme de cadre (non représentée), destinée au montage d'une partie formant ceinture d'un couvercle de fermeture de plus grandes dimensions que celles de l'embase.

A cet effet, ladite platine en forme de cadre encliquetée autour de l'embase 110 porte alors, sur ses bords périphériques, les cloisons permettant l'arrivée de manière isolée des différents conducteurs électriques dans la boîte de dérivation à ses différents niveaux.

Cette platine en forme de cadre (non représentée) positionnée autour de l'embase peut comporter les cheminées de réception du séparateur et de vissage de la partie formant ceinture du couvercle de fermeture, et, dans ce cas, l'embase 110 de la boîte de dérivation est simplifiée (voir plus particulièrement la figure 7) puisqu'elle ne comporte plus ces cheminées de réception.

## Revendications

1. Boîte de dérivation (100) pour goulottes, comprenant une embase (110) et un couvercle de fermeture (130), **caractérisée en ce que** l'embase (110) comporte un logement central (111) délimité par des cloisons découpables (112), formant boîte de connexion électrique, et autour de ce logement central (111) un chemin ouvert (113) de circulation de câbles ou conducteurs électriques.

2. Boîte de dérivation (100) selon la revendication 1, comportant un séparateur (120) apte à être positionné au-dessus de l'embase (110) pour créer dans ladite boîte deux niveaux isolés l'un de l'autre, un niveau pour les câbles ou conducteurs courant fort et un niveau pour les câbles ou conducteurs courant faible, **caractérisée en ce que** le séparateur (120) comporte un évidement central (121) traversant bordé par des cloisons découpables (122) et, sur chaque face du séparateur, autour de cet évidement central (121), un chemin ouvert (123) de circulation de câbles ou conducteurs électriques, ledit évidement central (121) étant destiné à former un prolongement dudit logement central (111) de l'embase (110).

3. Boîte de dérivation (100) selon la revendication 2, **caractérisée en ce que** les cloisons (122), qui bordent l'évidement central (121) du séparateur (120) et qui sont situées du côté tourné vers l'embase, forment des surfaces de guidage qui, lors de la mise en place du séparateur (120) sur l'embase (110), sont aptes à coulisser sur les cloisons (112) délimitant le logement central (111) de l'embase (110).

4. Boîte de dérivation (100) selon l'une des revendications 2 ou 3, **caractérisée en ce que** le séparateur (120) est apte à être placé selon différentes positions en hauteur par rapport à l'embase (110) comprises entre deux positions limites haute et basse, pour adapter le volume de câblage des deux niveaux au besoin d'utilisation.

5. Boîte de dérivation (100) selon la revendication 4, **caractérisée en ce que** le séparateur (120) est monté à coulissement sur l'embase (110).

6. Boîte de dérivation (100) selon la revendication 5, **caractérisée en ce que** le séparateur (120) comprend des languettes élastiques (124) dont les extrémités sont aptes à coulisser dans des rainures (114) prévues sur la face externe de cheminées (115) s'élevant à partir de l'embase (110).

7. Boîte de dérivation (100) selon l'une quelconque des revendications précédentes, **caractérisée en ce que** le couvercle de fermeture (130) comporte deux parties, d'une part, une première partie formant ceinture (131) apte à recouvrir l'embase (110), cette première partie (131) comportant une paroi latérale périphérique (133) pourvue d'ouvertures (134) communiquant avec l'intérieur des goulottes, et une paroi de façade (135) pourvue d'une ouverture centrale (136) autorisant l'accès à l'intérieur de ladite boîte de dérivation et en particulier audit logement central (111) et à au moins une partie du chemin de circulation (123) des câbles ou conducteurs électriques, et, d'autre part, une plaque de fermeture (132) de la paroi de façade (135) de ladite première partie formant ceinture (131).

8. Boîte de dérivation (100) selon la revendication 7, **caractérisée en ce que** la partie formant ceinture (131) est fixée sur l'embase (110) au moyen de vis vissées dans des cheminées de réception (115) portées par l'embase (110).

9. Boîte de dérivation (100) selon la revendication 7, **caractérisée en ce qu'**il est prévu une platine en forme de cadre fixée par encliquetage autour de ladite embase (110), la partie formant ceinture (131) du couvercle de fermeture (130) étant fixée sur cette platine en la recouvrant au moyen de vis vissées dans des cheminées de réception portées par ladite platine.

10. Boîte de dérivation (100) selon l'une des revendications 8 ou 9, **caractérisée en ce que** la paroi de façade (135) de la partie formant ceinture (131) porte des plots de guidage (137) des vis de fixation, destinés à reposer sur les extrémités desdites cheminées (115).

11. Boîte de dérivation (100) selon l'une des revendications 7 à 10, **caractérisée en ce que** la plaque de fermeture (132) est encliquetée sur la paroi de façade (135) de la partie formant ceinture (131).

12. Boîte de dérivation (100) selon l'une des revendications 7 à 11, **caractérisée en ce qu'**il est prévu des caches (140) rapportés sur lesdites ouvertures (134) non utilisées de ladite partie formant ceinture (131) afin de les obturer.

13. Boîte de dérivation (100) selon l'une quelconque des revendications précédentes, **caractérisée en ce que** le logement central (111) de l'embase (110) présente une forme circulaire formant avec ledit chemin ouvert (113) un rond-point de circulation de câbles ou conducteurs électriques.

14. Boîte de dérivation (100) selon l'une quelconque des revendications 2 à 13, **caractérisée en ce que** les formes des chemins ouverts (113, 123) de circulation de câbles ou conducteurs électriques de l'embase (110) et du séparateur (120) sont identiques, et la forme de l'évidement central (121) du séparateur (120) est identique à celle du logement central (111) de l'embase (110).

15. Boîte de dérivation (100) selon l'une des revendications 2 à 14, **caractérisée en ce que** l'embase (110) comporte, sur ses bords (116) aptes à être placés de manière adjacente aux bords coupés des socles de goulottes, des cloisons (117, 118) définissant, avec des cloisons (127, 128) prévues sur les bords (126) du séparateur (120), des logements parallélépipédiques isolés les uns des autres et ouverts vers l'extérieur de ladite boîte, lesdites cloisons (117, 118, 127, 128) de l'embase (110) et du séparateur (120) étant aptes à être découpées pour former des conduits pour l'introduction de câbles ou conducteurs électriques à un desdits niveaux de ladite boîte, de manière isolée de l'autre niveau de cette dernière.

16. Boîte de dérivation (100) selon l'une des revendications 7 à 14, **caractérisé en ce qu'**il est prévu une platine en forme de cadre fixée par encliquetage autour de ladite embase (110) et destinée à être recouverte par la première partie formant ceinture (131) du couvercle de fermeture (130), cette platine en forme de cadre comportant, sur ses bords aptes à être placés de manière adjacente aux bords coupés des socles de goulottes, des cloisons définissant, avec des cloisons prévues sur les bords du séparateur, des logements parallélépipédiques isolés les uns des autres et ouverts vers l'extérieur de ladite boîte; lesdites cloisons de la platine et du séparateur étant aptes à être découpées pour former des conduits pour l'introduction de câbles ou conducteurs électriques à un desdits niveaux de ladite boîte, de manière isolée de l'autre niveau de cette dernière.

## Claims

1. Branch connection box (100) for trunking, said box including a base (110) and a cover (130),
**characterised in that** the base (110) includes a central housing (111) delimited by partitions (112) that can be cut and forming an electrical connection box and, around said central housing (111), an open path (113) for routing electrical conductors or cables.

2. Branch connection box (100) according to claim 1, including a separator (120) adapted to be positioned above the base (110) to create in said box two levels isolated from each other, namely a level for high-current conductors or cables and a level for low-current conductors or cables, **characterised in that** the separator (120) has a central opening (121) through it flanked by partitions (122) which can be cut and, on each face of the separator, around said central opening (121), an open path (123) for routing electrical conductors or cables, said central opening (121) forming an extension of said central housing (111) of the base (110).

3. Branch connection box (100) according to claim 2, **characterised in that** the partitions (122) flanking the central opening (121) of the separator (120) and on the side facing toward the base form guide surfaces which slide on the partitions (112) delimiting the central housing (111) of the base (110) during mounting of the separator (120) on the base (110).

4. Branch connection box (100) according to claim 2 or 3, **characterised in that** the separator (120) can be placed at different positions in the heightwise direction relative to the base (110) between top and bottom limiting positions to adapt the wiring volume of the two levels as required.

5. Branch connection box (100) according to claim 4, **characterised in that** the separator (120) is slidably mounted on the base (110).

6. Branch connection box (100) according to claim 5, **characterised in that** the separator (120) includes elastic tongues (124) whose ends are adapted to slide in grooves (114) on the outside face of upstanding chimneys (115) on the base (110).

7. Branch connection box (100) according to any preceding claim, **characterised in that** the cover (130) is in two parts, namely a first part forming a belt (131) adapted to cover the base (110) and including a peripheral side wall (133) provided with openings communicating with the interior of the trunking and a front wall (135) provided with a central opening (136) providing access to the interior of said branch connection box and in particular to said central housing (111) and to at least part of the path (123) for routing electrical conductors or cables, and a closure plate (132) for closing the front wall (135) of said first part forming a belt (131).

8. Branch connection box (100) according to claim 7, **characterised in that** the part forming a belt (131) is fixed to the base (110) by screws screwed into chimneys (115) on the base (110).

9. Branch connection box (100) according to claim 7 **characterised in that** it includes a plate in the form of a frame clipped around said base (110), the part forming a belt (131) of the cover (130) being fixed to said plate, which it covers, by screws that are screwed into chimneys on said plate.

10. Branch connection box (100) according to claim 8 or 9, **characterised in that** the front wall (135) of the part forming a belt (131) carries guide studs (137) for the fixing screws adapted to bear on ends of said chimneys (115).

11. Branch connection box (100) according to any of claims 7 to 10, **characterised in that** the closure plate (132) clips onto the front wall (135) of the part forming a belt (131).

12. Branch connection box (100) according to any of claims 7 to 11, **characterised in that** it includes covers (140) attached to unused openings (134) in the part forming a belt (131) to close them off.

13. Branch connection box (100) according to any preceding claim, **characterised in that** the central housing (111) of the base (110) is circular and in conjunction with said open path (113) forms a roundabout for routing electrical conductors or cables.

14. Branch connection box (100) according to any of claims 2 to 13, **characterised in that** the open paths (113, 123) for routing electrical conductors or cables of the base (110) and the separator (120) are identical in shape and the central opening (121) in the separator (120) is identical in shape to the central housing (111) of the base (110).

15. Branch connection box (100) according to any of claims 2 to 14, **characterised in that** the base (110) has, on its edges (116) adapted to be placed adjacent cut ends of base sections of runs of trunking, partitions (117, 118) defining, in conjunction with partitions (127, 128) at the edges (126) of the separator (120), parallelepiped-shaped housings isolated from each other and open toward the outside of said box, said partitions (117, 118, 127, 128) of the base (110) and the separator (120) being adapted to be cut to form ducts for inserting electrical conductors or cables at one of said levels of said box, isolated from the other level thereof.

16. Branch connection box (100) according to any of claims 7 to 14, **characterised in that** it includes a plate in the form of a frame clipped around said base (110) and adapted to be covered by the first part forming a belt (131) of the cover (130), said plate in the form of a frame having, on its edges adapted to be placed adjacent cut ends of base sections of runs of trunking, partitions defining, in conjunction with partitions on the edges of the separator, parallelepiped-shaped housings isolated from each other and open toward the outside of said box, said partitions of the plate and of the separator being adapted to be cut to form ducts for inserting electrical conductors or cables at one of said levels of said box, isolated from the other level thereof.

## Patentansprüche

1. Abzweigdose (100) für Kabelkanäle, mit einem Sockel (110) und einem Verschlussdeckel (130),
**dadurch gekennzeichnet, dass** der Sockel (110) eine von heraustrennbaren Trennwänden (112) umgrenzte, eine Anschlussdose bildende mittige Aufnahme (111) und um diese mittige Aufnahme (111) herum eine offene Kabelrinne (113) zum Führen von Kabeln oder Leitungen aufweist.

2. Abzweigdose (100) nach Anspruch 1, mit einem Trennelement (120), das über dem Sockel (110) angeordnet zu werden vermag, um in der Dose zwei voneinander getrennte Ebenen zu schaffen, nämlich eine Ebene für Starkstromkabel oder -leitungen und eine Ebene für Schwachstromkabel oder -leitungen,
**dadurch gekennzeichnet, dass** das Trennelement (120) eine von heraustrennbaren Trennwänden (122) umgebene, durchgehende mittige Aussparung (121) und um die mittige Aussparung (121) herum, auf jeder Seite des Trennelements, eine offene Kabelrinne (123) zum Führen von Kabeln oder Leitungen aufweist, wobei die mittige Aussparung (121) dazu bestimmt ist, eine Fortsetzung der mittigen Aufnahme (111) des Sockels (110) zu bilden.

3. Abzweigdose (100) nach Anspruch 2,
**dadurch gekennzeichnet, dass** die Trennwände (122), die die mittige Aussparung (121) des Trennelements (120) umgeben und die auf der dem Sockel zugewandten Seite liegen, Führungsflächen bilden, die beim Anbringen des Trennelements (120) auf dem Sockel (110) auf den Trennwänden (112), die die mittige Aufnahme (111) des Sockels (110) umgrenzen, zu gleiten vermögen.

4. Abzweigdose (100) nach einem der Ansprüche 2 oder 3,
**dadurch gekennzeichnet, dass** das Trennelement (120) bezüglich des Sockels (110) in unterschiedlichen zwischen zwei äußersten, einer oberen und einer unteren, liegenden Höhenlagen platziert zu werden vermag, um den Verdrahtungsbereich der beiden Ebenen dem Nutzungsbedarf anzupassen.

5. Abzweigdose (100) nach Anspruch 4,
**dadurch gekennzeichnet, dass** das Trennelement (120) gleitend auf dem Sockel (110) montiert ist.

6. Abzweigdose (100) nach Anspruch 5,
**dadurch gekennzeichnet, dass** das Trennelement (120) elastische Zungen (124) aufweist, deren Enden in Nuten (114) zu gleiten vermögen, die an der Außenseite von Schäften (115) vorgesehen sind, welche sich vom Sockel aus erheben.

7. Abzweigdose (100) nach einem der vorhergehenden Ansprüche,
**dadurch gekennzeichnet, dass** der Verschlussdeckel (130) zwei Teile umfasst, einerseits einen ersten, einen gürtelförmigen Teil (131), der den Sockel (110) zu bedecken vermag, wobei der erste Teil (131) eine umlaufende Seitenwand (133), die mit Öffnungen (134) versehen ist, welche mit dem Innenraum des Kabelkanals in Verbindung stehen, und eine Stirnwand (135) aufweist, die mit einer mittigen Öffnung (136) versehen ist, welche den Zugang zum Innenraum der Abzweigdose und insbesondere zur mittigen Aufnahme (111) und wenigstens einem Teil der Kabelrinne (123) gestattet, und andererseits eine Platte (132) zum Verschließen der Stirnwand (135) des ersten gürtelförmigen Teils (131).

8. Abzweigdose (100) nach Anspruch 7,
**dadurch gekennzeichnet, dass** der gürtelförmige Teil (131) auf dem Sockel (110) mittels Schrauben befestigt ist, die in die vom Sockel (110) getragenen Aufnahmeschäfte (115) eingeschraubt sind.

9. Abzweigdose (100) nach Anspruch 7,
**dadurch gekennzeichnet, dass** eine rahmenförmige Platte vorgesehen ist, die durch Einrasten um den Sockel (110) herum befestigt ist, wobei der gürtelförmige Teil (131) des Verschlussdeckels (130) auf der Platte, und diese dabei bedeckend, mittels Schrauben befestigt ist, die in die von der Platte getragenen Aufnahmeschäften eingeschraubt sind.

10. Abzweigdose (100) nach einem der Ansprüche 8 oder 9,
**dadurch gekennzeichnet, dass** die Stirnwand (135) des gürtelförmigen Teils (131) Buchsen (137) zum Führen der Befestigungsschrauben trägt, die dazu bestimmt sind, auf den Enden der Schäfte (115) zu ruhen.

11. Abzweigdose (100) nach einem der Ansprüche 7 bis 10,
**dadurch gekennzeichnet, dass** die Verschlussplatte (132) auf der Stirnwand (135) des gürtelförmigen Teils eingerastet wird.

12. Abzweigdose (100) nach einem der Ansprüche 7 bis 11,
**dadurch gekennzeichnet, dass** Abdeckungen (140) vorgesehen sind, die auf die nicht verwendeten Öffnungen (134) des gürtelförmigen Teils (131) aufgesetzt werden, um diese zu verschließen.

13. Abzweigdose (100) nach einem der vorhergehenden Ansprüche,
**dadurch gekennzeichnet, dass** die mittige Aufnahme (111) des Sockels (110) eine runde Form aufweist, die mit der offenen Kabelrinne (113) einen Kreis zum Führen von Kabeln oder Leitungen bildet.

14. Abzweigdose (100) nach einem der Ansprüche 2 bis 13,
**dadurch gekennzeichnet, dass** die Formen der Kabelrinnen (113, 123) des Sockels (110) und des Trennelements (120) identisch sind, und die Form der mittigen Aussparung (121) des Trennelements (120) mit der der mittigen Aufnahme (121) des Sockels (110) identisch ist.

15. Abzweigdose (100) nach einem der Ansprüche 2 bis 14,
**dadurch gekennzeichnet, dass** der Sockel (110) an seinen Rändern (116), die an die Schnittränder der Kabelkanalsockel angrenzend angeordnet werden können, Trennwände (117, 118) aufweist, die zusammen mit an den Rändern (126) des Trennelements (120) vorgesehenen Trennwänden (127, 128) parallelepipedische Aufnahmen bilden, die voneinander getrennt und zur Außenseite der Dose hin offen sind, wobei die Trennwände (117, 118, 127, 128) des Sockels (110) und des Trennelements (120) heraustrennbar sind, um Kanäle zum Einführen von Kabeln und Leitungen in eine der Ebenen der Dose getrennt von deren anderen Ebene zu bilden.

16. Abzweigdose (100) nach einem der Ansprüche 7 bis 14,
**dadurch gekennzeichnet, dass** eine rahmenförmige Platte vorgesehen ist, die durch Einrasten um den Sockel (110) herum befestigt und dazu bestimmt ist, von dem ersten gürtelförmigen Teil (131) des Verschlussdeckels (130) bedecket zu werden, wobei die rahmenförmige Platte an ihren Rändern, die an die Schnittränder der Kabelkanalsockel angrenzend angeordnet werden können, Trennwände aufweist, die zusammen mit den an den Rändern des Trennelements vorgesehenen Trennwänden parallelepipedische Aufnahmen bilden, die voneinander getrennt und zur Außenseite der Dose hin offen sind, wobei die Trennwände der Platte und des Trennelements heraustrennbar sind, um Kanäle zum Einführen von Kabeln und Leitungen in eine der Ebenen der Dose getrennt von deren anderen Ebene zu bilden.
